# EUROPEAN PATENT SPECIFICATION

(11) **EP 0 745 993 B1**
(45) Date of publication and mention of the grant of the patent: **29.08.2001**
(21) Application number: 96302861.8
(22) Date of filing: 24.04.1996
(51) Int. Cl.: G11B 20/14

(54) **Digital signal recorder**
Digitalsignalaufzeichnungsgerät
Appareil d'enregistrement de signaux numériques

(30) Priority: 29.05.1995 KR 9513687
(43) Date of publication of application: 04.12.1996
(73) Proprietor: Samsung Electronics Co., Ltd., Suwon-city, Kyungki-do 441-370 (KR)
(72) Inventor: Ko, Jung-wan, Suwon-city, Kyungki-do (KR); Kim, Soon-tae, Kumi-city, Kyongsangbuk-do (KR)
(74) Representative: Chugg, David John

(56) References cited:
- EP-A- 0 345 986
- EP-A- 0 476 767
- EP-A- 0 624 872
- US-A- 4 573 034
- US-A- 4 755 889

## Description

The present invention relates to a digital signal recorder, and more particularly, to a digital signal recorder for real-time-processing and recording an (n+m)-bit channel word obtained by inserting m bits into input data of n bits to have a desired frequency characteristic.

When reproducing recorded information from a magnetic recording medium using, for example, a videocassette recorder, if a reproducing head deviates from a track on the recording medium, a clean screen image cannot be obtained. Thus, proper tracking must be maintained, by which the head precisely traces a target track. Precise tracking is especially necessary in a home digital VCR, since the tracks are made narrow for extended recording capability. To achieve precision tracking, the exact degree of deviation from the target track must be calculated. One method to accomplish this uses a pilot signal recorded in each track and detects the magnitude of the crosstalk between the pilot signals of two adjacent tracks to determine the direction of track deviation between successive tracks.

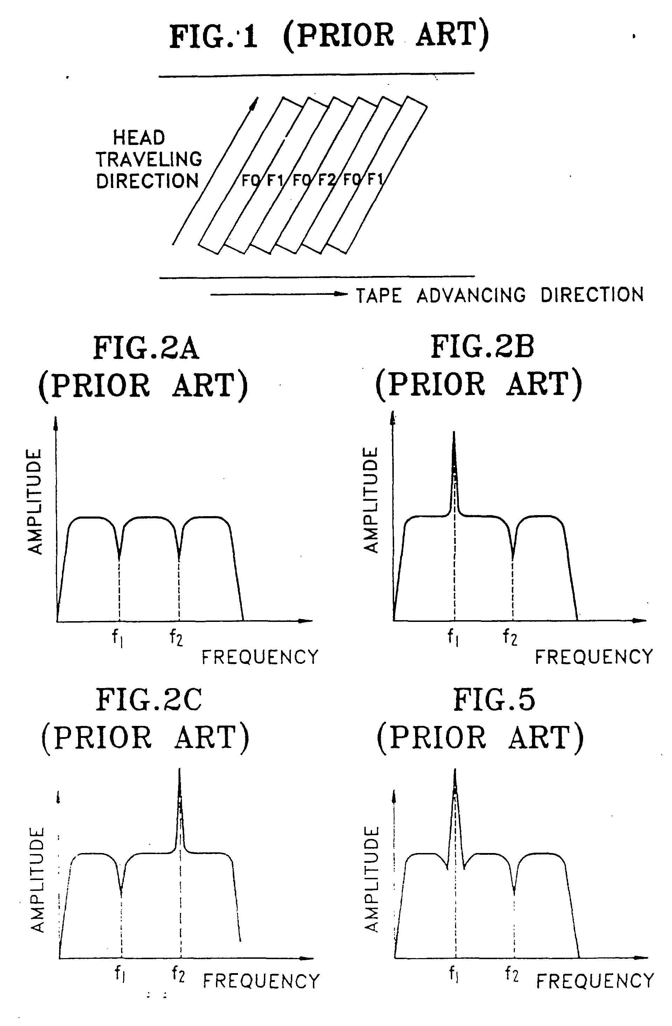

Figure 1 shows how a recorder for executing such a method records a pilot signal on a magnetic medium, e.g., tape. Here, it should be noted that, while the pilot signal is shown here to have three patterns of F0, F1 and F2 repeatedly recorded on the tracks of the tape, and that the sequence in Figure 1 is F0, F1, F0, F2, F0, F1..., the number of patterns and the order of their recording can be changed.

Figures 2A, 2B and 2C show the frequency characteristics of the F0, F1 and F2 patterns, respectively. Here, the F0 pattern exhibits notches at frequencies f₁ and f₂, the F1 pattern exhibits a peak at frequency f₁ (the pilot signal) and a notch at frequency f₂, and the F2 pattern exhibits a notch at frequency f₁ and a pilot signal at frequency f₂.

Referring to Figures 1 and 2, when reproducing the F0 pattern, the magnitude of crosstalk between the F1- and F2-pattern pilot signals (the f₁ and f₂ peaks) of the neighboring track are used. If the head is deviated from a center of the F0 pattern to slant toward the F1 pattern side, the magnitude of the pilot signal of the F1 pattern is greater than that of the F2 pattern, thereby resulting in the f₁ frequency component of the reproduced signal becoming greater and the f₂ frequency component becoming smaller.

Since the frequencies f₁ and f₂ of the reproduced signal are compared with each other with respect to the F0 pattern so that the deviation in the tracking of the head can be detected, it is possible to realize precise tracking with the control of the height of the head mounted on a piezoelectric element by a voltage supplied thereto or with the adjustment of a transfer velocity of the magnetic recording medium.

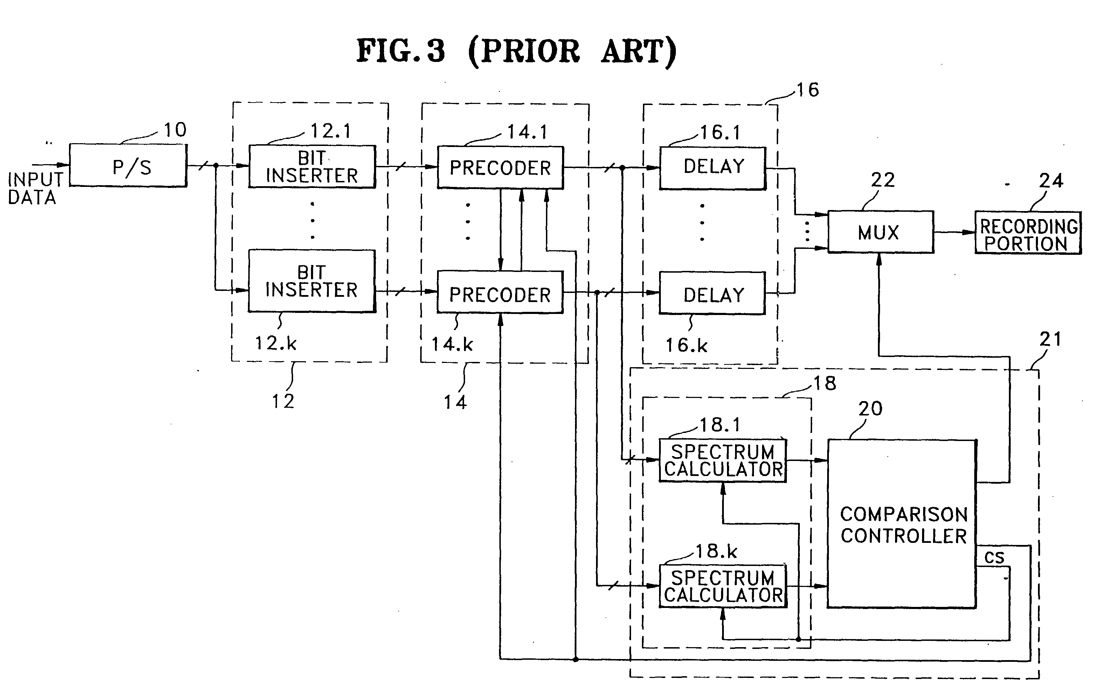

A method for recording the conventional F0, F1 and F2 patterns will now be explained with reference to Figure 3 in which a block diagram of a conventional digital signal recorder is shown.

Referring to Figure 3, a parallel-to-serial converter (P/S) 10 converts a parallel 8-bit digital signal into a serial n-bit information word. Here, for example, three parallel 8-bit digital signals are converted into a serial 24-bit information word. Then, a signal inserting portion 12, being composed of a plurality (here, k) of bit inserters 12.1 to 12.k, inserts m additional bits immediately in front of the n-bit information, i.e., without a space, to control the signal inserting portion 12 such that its output signal includes a predetermined spectral component.

At this time, the cases of the additional bits are comprised of all possible combinations corresponding to the number of the additional bits. That is, if one additional bit is inserted into the n-bit information word in signal inserting portion 12, two (n+1)-bit information words into which a "0" bit and a "1" bit are inserted, respectively, are generated. When all data capable of being expressed in two bits is inserted into the n-bit information word, four (n+2)-bit information words into which "00" bits, "01" bits, "10" bits and "11" bits are inserted, respectively, are generated. A modulating portion 14 comprised of a plurality of precoders 14.1 to 14.k performs an interleave non-return-to-zero inversion (I-NRZI) on the (n+m)-bit information word supplied from bit inserters 12.1 to 12.k, to output an (n+m)-bit channel word.

A frequency analyzing portion 18 composed of a plurality of spectrum calculators 18.1 to 18.k calculates the magnitude of the spectral energy of a plurality of (n+m)-bit channel words into which n additional bits supplied from precoders 14.1 to 14.k are inserted.

A comparison controller 20 compares the magnitude of the spectral energy of each channel word calculated by the plurality of spectrum calculators 18.1 to 18.k with each other, to generate a selection control signal for selecting the channel word having the smallest error signal among the error signals of each channel word, the error signal being the magnitude of the calculated spectrum component and to output the selection control signal to a selecting portion (MUX) 22, and feeds back a control signal(CS) for changing an accumulated operation value stored as an (n+m)-bit unit in the integrator(not shown) of each spectrum calculator into the accumulated operation value of the selected channel signal. Comparison controller 20 also replaces each initial value of the precoders with the initial value of the precoder of the selected channel to output the control signal to signal inserting portion 12.

Selecting portion 22 composed of a multiplexer selects the output of the precoder approximating a desired frequency characteristic among the outputs of precoders 14.1 to 14.k, according to the selection control signal, and records the selected output on the digital tape through a recording portion 24.

A time compensating portion 16 composed of a plurality of delaying devices(DELAY) 16.1 to 16.k compensates for the time needed to generate the control signal in a control signal generating portion 21. Here, control signal generating portion 21 includes frequency analyzing portion 18 and comparison controller 20.

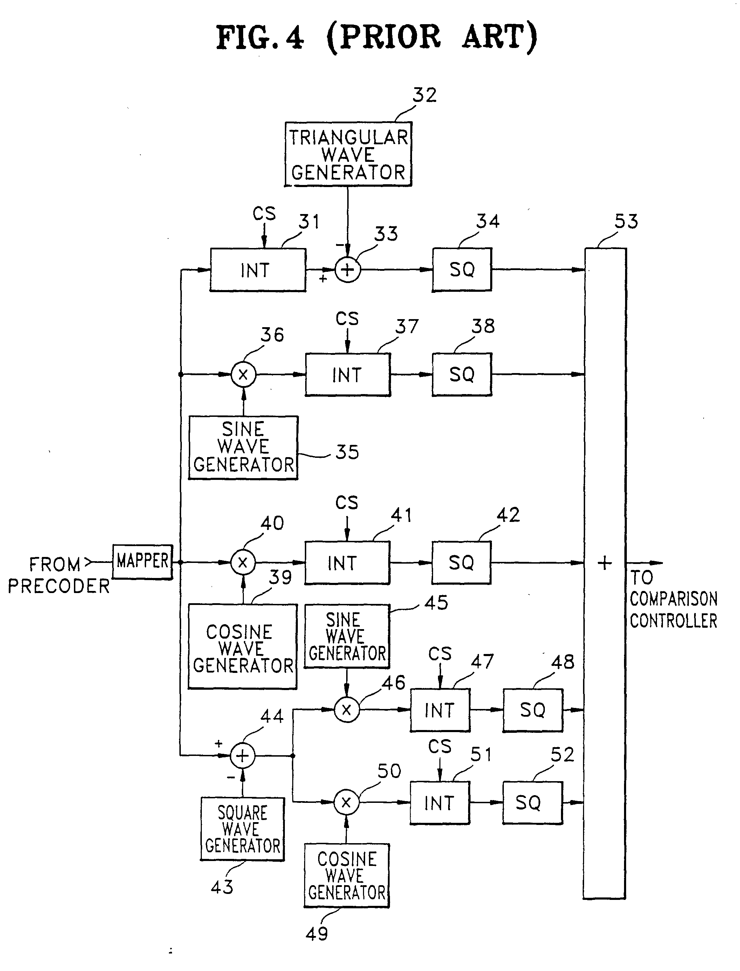

Each spectrum calculator of frequency analyzing portion 18 has a structure as shown in Figure 4. Thus, spectrum calculator 18.1 is explained herein as one example.

Referring to Figure 4, spectrum calculator 18.1 includes: a code-to-arithmetic mapper 30 for converting the ONEs and ZEROs of the output of the precoder 14.1 to the I-NRZI modulated arithmetic values that switche between negative and positive arithmetic values of similar amplitudes and are unaccompanied by a direct current component; an integrator (INT) 31 for receiving the (n+m)-serial-bit channel word supplied from precoder 14.1 to integrate the value of the received channel word with a prestored value; a triangular wave generator 32 for generating a triangular wave signal corresponding to a digital summation value of a desired frequency (here, f₁) from a serial data stream of the channel word; a subtracter 33 for subtracting the output of triangular wave generator 32 from the output of integrator 31; and a squaring element (SQ) 34 for squaring the obtained difference value, to form the desired peak at frequency f₁, without DC-component, on the output spectrum of precoder 14.1.

Spectrum calculator 18.1 further includes: a first multiplier 36 for multiplying the output of precoder 14.1 by a sine-wave system function sinω₂t of frequency of f₂ generated in a sine-wave generator 35; a second multiplier 40 for multiplying the output of precoder 14.1 by a cosine-wave system function cosω₂t of frequency of f₂ generated in a cosine-wave generator 39; integrators 37 and 41 for integrating the output of each multiplier 36 and 40; and squaring elements 38 and 42 for squaring the integration value of each integrator 37 and 41, to form the desired notch at frequency f₂ on the output spectrum of precoder 14.1.

Spectrum calculator 18.1 still further includes: a square wave generator 43 for generating a square wave of frequency fl; a subtracter 44 for subtracting the square wave from the output of precoder 14.1; a third multiplier 46 for multiplying the substracted value by a sine-wave system function sinω₁t of frequency of f₁ generated in a sine-wave generator 45; a fourth multiplier 50 for multiplying the subtracted value by a cosine-wave system function cosω₁t of frequency of f₁ component generated in a cosine-wave generator 49; integrators 47 and 51 for integrating each output value of multipliers 46 and 50; and squaring elements 48 and 52 for squaring the integration value of each integrator 47 and 51, to form the desired notch on either side of a peak at frequency of f₁. The phrase "system function" is used in digital electronics to refer to a function in the analog region that is described on a sampled-data basis by digital samples.

The triangular wave generator 32 can be replaced by one generating a wave complementary to a wave generated by the generator 32, and subtracter 33 can be replaced by an adder, without no change in operation. Square wave generator 43 can be replaced by one generating a wave complementary to a wave generated by the generator 43, and subtracter 44 can be replaced by an adder, without no change in operation.

An adder 53 sums the outputs of squaring elements 34, 38, 42, 48 and 52 to generate an error signal and outputs the error signal to comparison controller 20 of Figure 3. Comparison controller 20 receives the error signals of the spectrum calculators as shown in Figure 4, to generate a selection control signal for selecting the channel word having the error signal of the smallest value. Comparison controller 20 also generates a control signal for supplying the value accumulated in the integrators of a channel having the smallest error signal to the integrators of the unselected channel and generates a control signal for controlling the initial value of precoders 14.1 to 14.k.

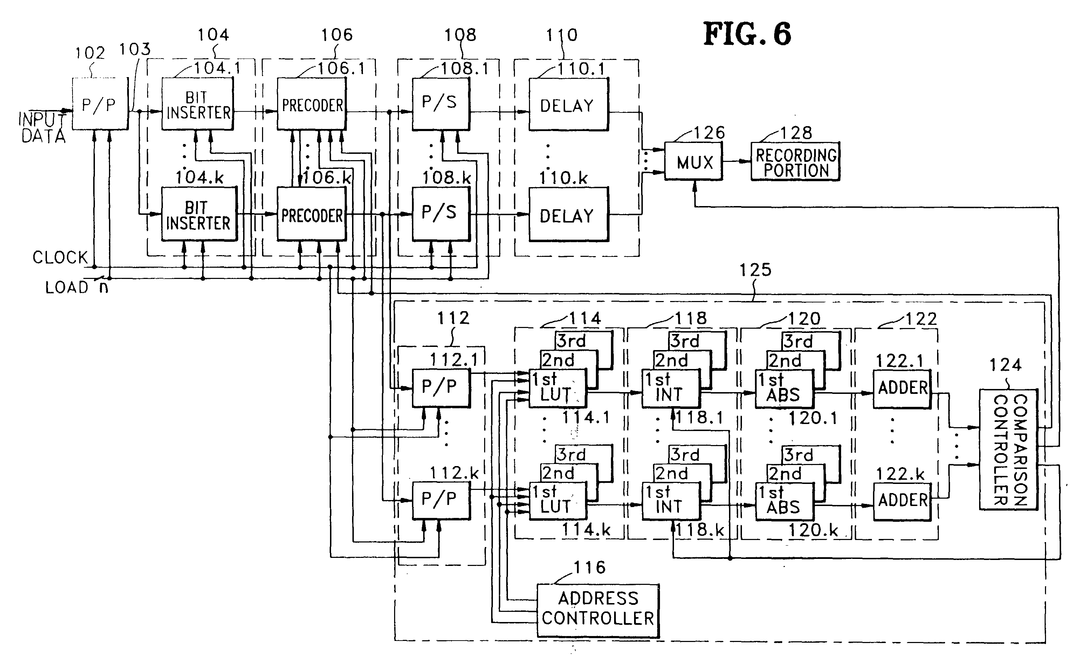

The frequency characteristic of the spectrum calculator having such a structure shown in Figure 4 is shown in Figure 5.

When the frequency spectrum shown in Figure 5 is compared with the frequency spectrum of the F1 pattern shown in Figure 2B, a dip is formed either side of a peak at frequency f₁ to thereby facilitate the detection of the pilot signal. Namely, the decrease in noise power at the sidebands of frequency of f₁ increases the signal-to-noise ratio for detecting the pilot signal at frequency f₁.

The operation of spectrum calculator 18.1 when generating the F1 pattern has been described. When generating the F2 pattern, the operation of spectrum calculator 18.1 is modified by transposing f₁ and f₂, thereby also transposing W₁ and W₂. When generating the F0 pattern, the operation of spectrum calculator 18.1 is modified, that is, so as to disable triangular wave generator 32 and square wave generator 43.

In the conventional digital signal recorder shown in Figures 3 and 4, however, after the last bit of the channel word of n+m bits is input to each spectrum calculator and until before the input of the next such channel word, the spectrum calculation operation, the generation of the selection control signal for selecting the channel word according to the calculated spectrum, and the presetting of the accumulated value of integrators for accumulating the result of the spectrum calculation of each channel to the accumulation value of the selected channel word should all be performed in real time.

Namely, according to the selection control signal generated in the control signal generating portion and for selecting the channel word having a desired frequency spectrum, the value accumulated in integrators of the unselected channel should be preset to the value accumulated in integrators of the selected channel. However, there is a time delay due to the multiplier, the integrator and the squaring circuit of each spectrum calculator until the control signal is generated, so that the real-time processing is difficult. This is due to next n+m bits channel word already being input and accumulated in each integrator while the control signal is generated in the comparison controller of the control signal generating portion.

Accordingly, real-time processing is difficult when high-speed signal transmission is needed, due to the limitations in the signal processing speed of the circuit elements. However, the employment of high-speed circuit elements increases manufacturing costs.

EP 476767 discloses a digital signal recorder in accordance with the preamble of claim 1.

To overcome the fully described problems as above, it is an aim of preferred embodiments of the present invention to provide a digital signal recorder for dividing the n+m bits channel word obtained by modulating with interleave NRZI the n+m bits channel word obtained by affixing m bits as a prefix to the digital data of n bits, into a predetermined number, and parallel-processing the divided channel word so that a selection control signal for selecting the channel word having a desired frequency characteristic is generated to thereby process the selected channel word in real time and record the processed channel word.

It is another aim of preferred embodiments of the present invention to provide a digital signal recorder for dividing the channel word modulated with interleave NRZI into a predetermined number and parallel-processing the divided channel word so that high-speed signal processing can be realized without the expense of high speed elements.

According to the invention, there is provided a digital signal recorder for converting an information word of n bits into a channel word of n+m bits to record the converted channel word as digital information on an information track of a magnetic record medium, said digital signal recorder comprising: an input port for receiving said information word of n bits in parallel; encoding means for inserting m bits into said input information word of n bits input in parallel to be converted into at least two channel words of n+m bits, and outputting the converted channel words; control signal generating means for analyzing frequency characteristics and generating a selection control signal for selecting said channel word having a desired frequency characteristic on the basis of the analyzed spectrum; and recording means for selecting one among the plurality of channel words of n+m bits supplied from said encoding means on the basis of said selection control signal and recording the selected channel word on the information track of the magnetic record medium so as to be a serial channel word, the signal recorder being characterised in that there is further provided time division multiplexing means for dividing said converted channel words from the encoding means by a predetermined number of bit units, to output each such divided converted channel word as a divided parallel channel word and, wherein, said control signal generating means is arranged for storing in advance spectrum data according to a predetermined track pattern, corresponding to the divided parallel channel word, and wherein the step of analysing frequency characteristics is performed by analysing the divided parallel channel words of each channel supplied in parallel from said time division multiplexing means by using the stored spectrum data.

Preferably, said control signal generating means comprises: a predetermined number of memories for each channel, storing the spectrum data according to said track pattern corresponding to all data capable of being expressed by said divided parallel channel; an address controller for generating an address signal so as to read out desired spectrum data stored in said memories according to said track pattern; a predetermined number of accumulation circuits for each channel, for accumulating said spectrum data read out from said memories by n+m bits unit; a predetermined number of absolute value calculating circuits for each channel, for obtaining the absolute values of the values accumulated in said accumulation circuits; an adding circuit for each channel, for adding the outputs of said absolute value calculating circuits; and a comparison controller for outputting a selection control signal for selecting the channel word having the smallest value by comparing the outputs of said adding circuit of each channel with one another, and feeding back a control signal for presetting the accumulated value of an unselected accumulation circuit to the value of the accumulation circuit of the selected channel, to said accumulation circuits of each channel.

Preferably, said memory comprises LUTs including data regions corresponding to the number of track patterns in which data forming a peak and having no DC component according to said track pattern is stored.

Preferably, said memory comprises LUTs including data regions in which data forming a notch according to said track pattern is stored.

Preferably, said memory comprises LUTs including data regions in which data forming a dip on either side of a peak according to said track pattern is stored.

Said memory may comprise: a first LUT including data regions in which data forming a peak and having no DC component according to said track pattern is stored; a second LUT including data regions in which data forming a notch according to said track pattern per each channel is stored; and a third LUT including data regions in which data forming a dip on either side of said peak according to said track pattern is stored.

Said predetermined number of bit units is preferably a common divisor of the period of said channel word of n+m bits and the period of spectral energy to be controlled according to said track pattern, and wherein said period of spectral energy is a positive number times a system clock.

"m" is preferably one, n is preferably 24 and the common divisor is preferably five.

Preferably said memory of each channel receives a parallel divided channel word supplied from said time division multiplexing means as a lower address and receives the address supplied from said address controller as an upper address, so as to read out spectrum data according to said upper and lower addresses.

For a better understanding of the invention, and to show how embodiments of the same may be carried into effect, reference will now be made, by way of example, to the accompanying diagrammatic drawings, in which:
Figure 1 is a track pattern drawing of a record signal recorded on a magnetic record medium;
Figures 2A to 2C are drawings of frequency characteristic according to the track pattern shown in Figure 1;
Figure 3 is a schematic block drawing of a conventional digital signal recorder;
Figure 4 is a detailed circuit drawing of a spectrum calculator shown in Figure 3;
Figure 5 is a drawing of frequency characteristic of the spectrum calculator shown in Figure 4;
Figure 6 is a block drawing according to one embodiment of a digital signal recorder according to the present invention;
Figure 7 is a detailed drawing of part of the blocks shown in Figure 6;
Figures 8A to 8C are drawings for explaining the look-up tables shown in Figure 6;
Figures 9A to 9C are drawings for illustrating a triangular wave signal, a square wave signal, a sine wave signal and a data stream of a channel word of 25 bits, respectively; and
Figure 10 is a drawing for explaining a data region of the look-up table shown in Figure 8A.

First of all, in order to signal-process in parallel a channel word of n+m bits with a prefix bit of m bits proposed by embodiments of the present invention, the following conditions (1) and (2) should be met.
(1) Spectral energy desired to control, namely, periods of frequency f₁ and f₂ in F0, F1 and F2 patterns, should be a positive number times the period of a clock for signal processing (system clock).
(2) If it is asummed that a common divisor of the period of the spectral energy and the period of the channel word of n+m bits is Cd, the channel word of n+m bits modulated with interleave NRZI and input in parallel is divided by the common divisor (Cd) to analyze the spectrum of the divided parallel channel word unit so that the selection control signal for selecting the channel word having a desired spectrum characteristic should be generated. Here, the common divisor (Cd) becomes a factor for determining a maximum operation speed, since a processing time corresponding to the number resulting from dividing the channel word of n+m bits by the common divisor (Cd) is needed.

Figure 6 is a block diagram according to one embodiment of the digital signal recorder.

The digital signal recorder shown in Figure 6 includes: a parallel-to-parallel (P/P) converting portion 102 for converting digital data input in parallel into an information word of n bits; a signal inserting portion 104 including a plurality (here, k) of bit inserters 104.1 to 104.k for inserting m bits in front of the information word of n bits input in parallel; a modulating portion 106 including a plurality of precoders 106.1 to 106.k for outputting the information word of n+m bits as the channel word of n+m bits; a first signal converting portion 108 including a plurality of P/S converter 108.1 to 108.k for converting the outputs of the plurality of precoders 106.1 to 106.k into serial signals; a time compensating portion 110 including a plurality of delaying devices 110.1 to 110.k for delaying the serial signals of a plurality of channels; a second signal converting portion 112 including a plurality of P/P converters 112.1 to 112.k for dividing the channel word of n+m bits output from the plurality of precoders 106.1 to 106.k by the common divisor (Cd); a memory 114 including a predetermined number (here, three) per each channel of look-up tables (LUT) for storing the spectrum component to be controlled, corresponding to the divided channel word supplied from each P/P converter of second signal converting portion 112, by track pattern; an address controller 116 for controlling the addresses of LUTs 114.1 to 114.k; an accumulating circuit 118 including a predetermined number per each channel of integrators 118.1 to 118.k for accumulating data read out from each LUT of memory 114; an absolute value calculating circuit 120 including a predetermined number per each channel of absolute value calculators 120.1 to 120.k for calculating the absolute value of each integrator of accumulating circuit 118; an adding circuit 122 including adders 122.1 to 122.k for adding the outputs of a predetermined number of absolute value calculators of each channel; a comparison controller 124 for feeding back to accumulating circuit 118 a selection control signal for selecting the channel word having an error signal of the smallest value among error signals supplied from each adder and a control signal for presetting the accumulated value of the unselected accumulating circuit to the value of the accumulating circuit of the selected channel and outputting to modulating portion 106 a control signal so that initial values of precoders 106.1 to 106.k coincide with those of the precoders of the selected channel; a selecting portion 126 for selecting the channel most approximate to a track pattern having a desired frequency characteristic according to the selection control signal; and a recording portion 128 for recording the channel word selected by selection portion 126. Here, elements 112, 114, 118, 120, 122 and 124 constitute a control signal generating portion 125. Also, absolute value calculators 120.1 to 120.k can constitute a squaring circuit.

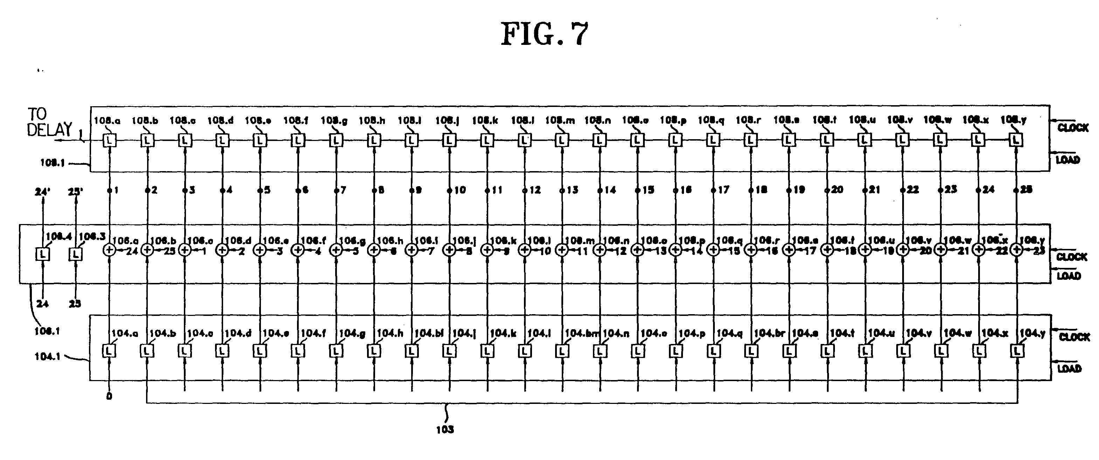

While the digital signal recorder shown in Figure 6 records the channel word having a desired frequency component by affixing m bits as a prefix to the information word unit of n bits, the operation of the recorder shown in Figure 6 is explained with an example of 24/25 modulation where m is 24, n is 1, and Cd is 5 with reference to Figures 7 to 10.

Referring to Figure 6, P/P converting portion 102 outputs the digital data of eight bits input in parallel as the information word of parallel 24 bits.

Signal inserting portion 104 inserts "0" bit or "1" bit into the information word of 24 bits input in parallel.

Figure 7 is a detailed block drawing of bit inserter 104.1, precoder 106.1, and P/S converter 108.1 in the state that "0" bit is inserted into the information word.

Referring to Figure 7, "0" bit inserter 104.1 includes 25 latches 104.a to 104.y, inserts bit "0" to latch 104.a for storing the most significant bit according to a load signal and a system clock and inputs the information word of 24 bits output in parallel from an output terminal 103 of P/P converting portion 102 to the remaining 24 latches 104.b to 104.y.

First inputs of exclusive-or gates (XOR) 106.a to 106.y of precoder 106.1 shown in Figure 7 are respectively coupled to the outputs of latches 104.a to 104.y of "0" bit inserter 104.1. Second inputs of XORs 106.a and 106.b are respectively coupled to the outputs of latches 106.3 and 106.4, and second inputs of XORs 106.c to 106.y are respectively coupled to the outputs of XORs 106.a to 106.w. The outputs of XORs 106.x and 106.y are respectively coupled to the inputs of latches 106.4 and 106.3. The operation of precoder 106.1 having such a structure is explained as follows.

The second least significant bit of the previous channel word of 25 bits and the most significant bit (here, inserted "0" bit) of the present channel word of 25 bits are input to XOR gate 106.a. The least significant bit of the previous channel word of 25 bits and a bit (here, a first bit of the input data) the second most significant bit of the present channel word of 25 bits are input to XOR gate 106.b. The output of XOR gate 106.a and a second bit of the input data are input to XOR gate 106.c, and the output of XOR gate 106.b and a third bit of the input data are input to XOR gate 106.d. The XOR gates 106.e through 106.y precode the remaining data of the 25-bit channel word in a similar manner. The data of each of XOR gates 106.a to 106.y is the channel word (what is called as the "modulation data") of 25 bits output in parallel from precoder 106.1.

P/S converter 108.1 shown in Figure 7 receives the output of each of XOR gates 106.a to 106.y according to the clock signal and the load signal, to output a serial channel word of 25 bits. Here, P/S converter 108.1 includes 25 latches 108.a to 108.y.

The delay of delaying devices 110.1 to 110.k of time compensating portion 110 compensates for the time needed to generate the control signal of the control signal generating portion 125.

Each P/P converter of second signal converting portion 112 divides the 25-bit channel word output in parallel from modulating portion 106 by a unit of five bits to output the result in parallel. The data of five bits output from each P/P converter becomes a lower address of the LUT of each channel.

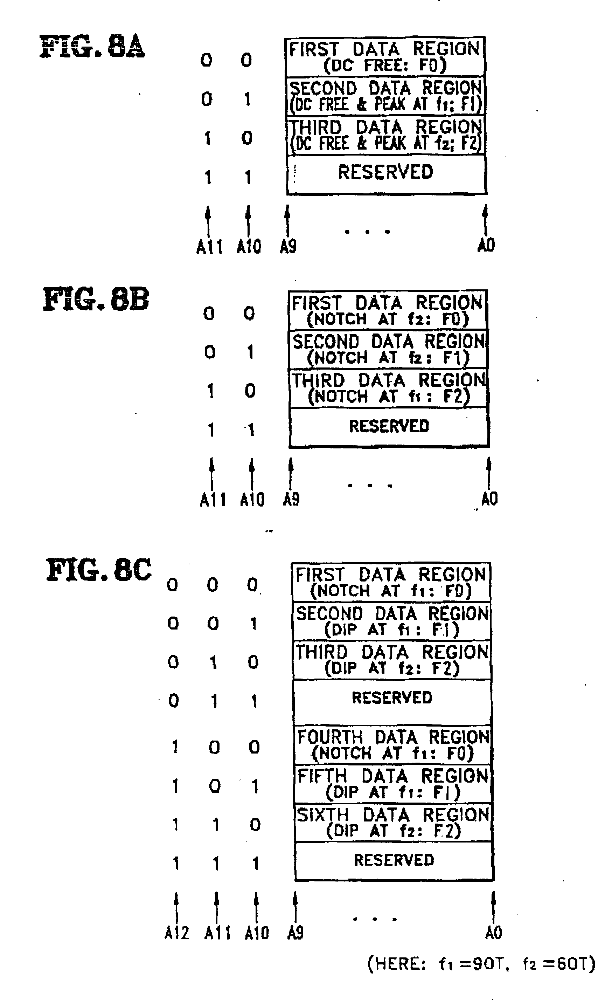

The LUT of each channel has three LUTs constructed as shown in Figures8A to 8C. As shown in Figure 8A, the first LUT of each channel includes three effective data regions for storing the data for forming the desired peak according to each pattern.

Namely, the data having a notch near zero hertz (the DC component) in the F0 pattern and having no DC component are stored in a first data region of the first LUT, the data having the desired peak at the frequency f₁ of the F1 pattern and having no DC component are stored in a second data region, and the data having the desired peak at the frequency f₂ of the F2 pattern and having no DC component are stored in a third data region.

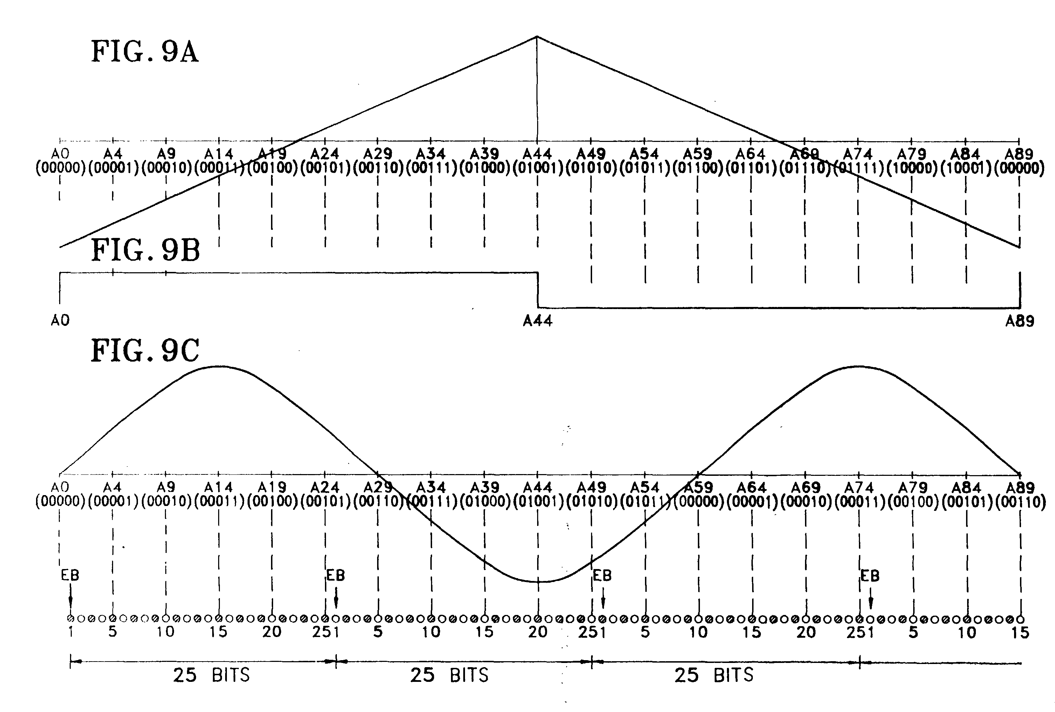

For example, in order to have the desired peak at the frequency f₁ while having no DC component, as shown in Figure 9A, the triangular wave signal having the frequency f₁ (here, f₁=90T and T=1/f_{b}, where f_{b} is bit frequency) and "0" bias signal is subtracted from or added to the accumulated channel word of 25 bits. In Figure 4, while the desired peak is formed at the frequency f₁ by subtracting the triangular wave from the accumulated channel word of 25 bits after the 25-bit channel word is accumulated in integrator 31, in Figure 6 of the present invention, since integrator 118.1 is located in a rear end of LUT 114.1, a square wave signal (refer to Figure 9B) obtained by differentiating the triangular wave signal (refer to Figure 9A) should be subtracted from the channel word supplied from P/P converter 112.1 in order to obtain the same result as above. At this time, the structure of triangular wave generator 32 and adder 33 corresponds to the second data region of the first LUT.

Accordingly, the bias signal is "0" and the square wave signal is sampled to get 90 samples for one period according to the system clock, to thereby divide the sampled result by the common divisor of the frequency f₁ and the channel word of 25 bits, namely, five sample units, so that eighteen addresses ("00000" through "10001") are generated with respect to the square wave.

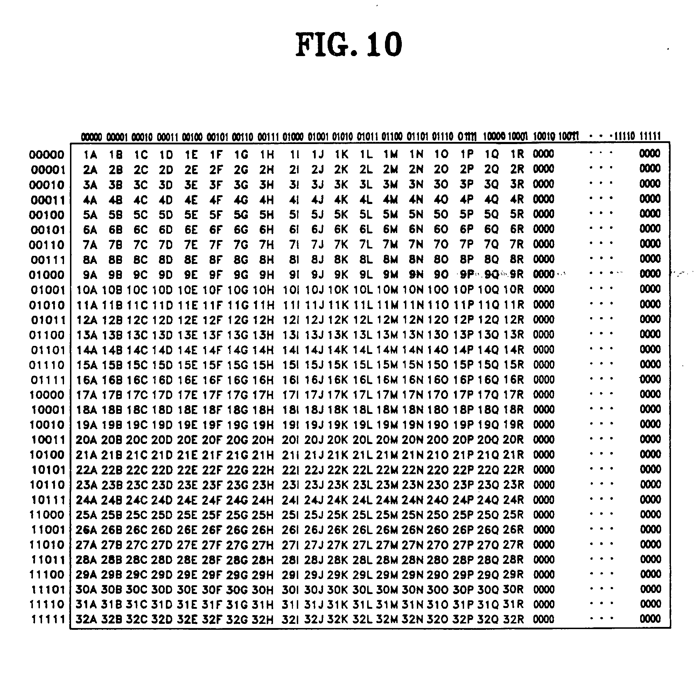

A result value obtained by subtracting respectively the square wave of five bits corresponding to the generated eighteen addresses from 32 data, namely, data from "00000" to "11111", capable of being expressed by the channel word of 5 bits divided from a serial data stream (refer to Figure 9C) of the channel word of 25 bits supplied from second signal converting portion 112, is stored in the second data region of the first LUT as shown in Figure 10.

As shown in Figure 8B, the second LUT of each channel includes three effective data regions for storing data forming the desired notch according to each track pattern.

Namely, the data having the desired notch at the frequency f₂ of the F0 pattern are stored in the first data region of the second LUT, the data having the desired notch at the frequency f₂ of the F1 pattern are stored in the second data region, and the data having the desired notch at the frequency f₁ of the F2 pattern are stored in the third data region.

For example, in order to have the desired notch at the frequency f₂ of the F1 pattern, the sum of the values obtained by multiplying the sine-wave system function and the cosine-wave system function, each having the frequency f₂ (here, 60T), by the channel word of 25 bits, respectively, should be stored in the second data region of the second LUT as shown in Figure 9C. The structure shown in Figure 4 of sine-wave generator 35, cosine-wave generator 39 and multipliers 36 and 40 corresponds to the second data region of the second LUT.

The sine-wave system function (refer to Figure 9C) and the cosine-wave system function of one period are sampled to have 60 samples respectively to then divide the sampled sine-wave system function by the common divisor of the frequency f₂ and the channel word of 25 bits, namely, five sample units, to thereby generate twelve addresses ("00000" to "01011").

The sum of the value obtained by multiplying respectively each sine wave system function data of five bits corresponding to the generated twelve addresses by 32 data capable of being expressed by the channel word of 5 bits and the value obtained by multiplying respectively each cosine wave system function data of 5 bits corresponding to the generated twelve addresses by 32 data capable of being expressed by the channel word of 5 bits, is stored in the second region of the LUT.

As shown in Figure 8C, the third LUT of each channel includes six effective data regions, namely, three data regions for storing data forming dips on either side of the peak frequency according to each track pattern when the square wave signal is positive and three such regions for the case when the square wave signal is negative.

Namely, data having the desired notch at the frequency f₁ of the F0 pattern are stored in the first and fourth regions of the third LUT, data having dip on either side of the frequency f₁ having the peak in the F1 pattern are stored in the second and fifth data regions and data having dip on either side of the frequency f₂ having the peak in the F2 pattern are stored in the third and sixth data regions.

For example, as shown in Figure 9B, in order to have dip on either side of the frequency f₁ of the F1 pattern, the sum of the values obtained by multiplying the subtracted (or added) result after the square wave signal having the frequency f₁ (here, 90T) is subtracted from or added to the channel word of 25 bits, by the sine-wave and cosine-wave system functions, each having the frequency f₁, should be stored in the second and fifth data regions of the third LUT. The structure of square wave generator 43, subtracter 44, sine wave generator 45, multipliers 46 and 50 and cosine wave generator 49 shown in Figure 4 corresponds to the second and fourth data regions of the third LUT.

If the sine-wave and cosine-wave system functions, each having the frequency of 90T, are divided by the common divisor of each f₁ frequency, namely, five sample units when the square wave signal (refer to Figure 9B) is positive, nine addresses ("00000" to "01000") are generated and if the sine- wave and cosine-wave system functions having the frequency of 60T are divided by five sample units when the square wave signal (refer to Figure 9B) is negative, nine addresses ("01001" to "10001") are generated.

The sum of the values obtained by respectively multiplying each sine wave system function and cosine wave system function data of 5 bits corresponding to the generated nine addresses by 32 data capable of being expressed by the corresponding channel word of 5 bits is stored in the second data region of the third LUT when the square wave signal is positive, and the same such sum is stored in the fifth data region of the third LUT when the square wave signal is negative.

Therefore, the resultant value obtained by calculating the spectrum according to the track pattern of the channel word of 5 bits supplied from each P/P converter is stored in three LUTs of each channel.

While the track pattern includes three LUTs per channel in order to obtain the frequency characteristic shown in Figure 5 in the embodiment of the present invention, the track pattern can include two LUTs per channel in order to obtain the frequency characteristic shown in Figures 2A to 2C and the alterations can be made.

In address controller 116, one bit (the most significant address), showing a positive signal or a negative signal of the supplied square wave signal, is supplied only to the third LUT, two bits (the second most significant address), showing the F0, F1 and F2 patterns, are accessed to the data region of each LUT, and 5 bits address (the third most significant address), together with the channel word of 5 bits supplied from the P/P converter, are accessed to the spectrum data stored in the address corresponding to each data region.

A 12-bit address, whose five lower bits (i.e., the channel word) are supplied from the corresponding P/P converters and whose seven upper bits are supplied from address controller 116, is supplied to the first and second LUTs (Figures 8A and 8B), and a 13-bit address, whose five lower bits (i.e., the channel word) are supplied from the corresponding P/P converter and whose eight upper bits are supplied from address controller 116, is input to the third LUT (Figure 8C).

The resultant value of the spectrum of 5-bit units according to each track pattern prestored in the LUT according to the address signal is read out to be input to the integrator of the accumulation circuit 118 connected to each LUT. Here, each integrator accumulates the resultant value of the spectrum of 5-bit units to accumulate the resultant value of the spectrum corresponding to the channel word of 25 bits. The present invention no longer needs code-to-arithmetic mapper 30 of Figure 4.

The absolute value of the accumulated value of each integrator is calculated in the absolute value calculator of absolute value calculating circuit 120 connected to each integrator. Each adder of adding circuit 122 adds the outputs of the three absolute value calculators per channel to output the added value as the error signal.

Comparison controller 124 generates the selection control signal for selecting the channel word having the error signal of smallest value among the error signals supplied from adding circuit 122 and generates the control signal so that the value of the integrator of the unselected channel is preset to the value of the integrator of the selected channel. Also, comparison controller 124 outputs the control signal to each precoder so that the initial values of the precoders coincide with one another. That is, the initial value of the precoder of the unselected channel is replaced with the initial value of the precoder of the selected channel.

Selecting portion 126 selects the channel word of 25 bits having a "0" bit affixed therewith or the channel word of 25 bits having a "1" bit affixed therewith according to the selection control signal. The channel word selected by selection portion 126 is recorded on the digital video tape through recording portion 128 or is transmitted through the transmission path.

Accordingly, since the digital signal recorder of embodiments of the present invention divides the channel word by a common divisor (Cd) and calculates the divided channel word in parallel to select the channel word having a desired frequency characteristic per clock period of n+m bits, the resultant value of the spectrum precalculated by common divisor (Cd) bit units is read out from the corresponding look-up table according to track pattern during a time corresponding to n+m-Cd so as to analyze the frequency characteristic, the selection control signal for selecting the channel word having the desired frequency characteristic on the basis of the analyzed result is generated, and the value accumulated in the integrator of the selected channel is preset to the value of the integrator of the unselected channel, thereby enabling the real-time-processing of the channel word of n+m bits.

As fully described as above, the digital signal recorder of the present invention processes the channel word of n+m bits in which m bits are affixed to the information word of n bits in parallel, to thereby generate the selection control signal for selecting the channel having the desired frequency characteristic until the next channel word of n+m bits is input. Thus, (n+m)-bit channel word can be processed in real time for recording.

Also, the digital signal recorder of the present invention divides the channel word of n+m bits in parallel to use the LUT for prestoring the resultant value of the spectrum according to the track pattern with the divided channel word unit to thereby generate the selection control signal for selecting the channel word having the desired spectrum, thus enabling a reduction in hardware.

## Claims

1. A digital signal recorder for converting an information word of n bits into a channel word of n+m bits to record the converted channel word as digital information on an information track of a magnetic record medium, said digital signal recorder comprising:
an input port (102) for receiving said information word of n bits in parallel;
encoding means (104, 106) for inserting m bits into said input information word of n bits input in parallel to be converted into at least two channel words of n+m bits, and outputting the converted channel words;
control signal generating means (125) for analyzing frequency characteristics and generating a selection control signal for selecting said channel word having a desired frequency characteristic on the basis of the analyzed spectrum; and
recording means (126, 128) for selecting one among the plurality of channel words of n+m bits supplied from said encoding means on the basis of said selection control signal and recording the selected channel word on the information track of the magnetic record medium so as to be a serial channel word,
the signal recorder being characterised in that there is further provided
time division multiplexing means (112) for dividing said converted channel words from the encoding means (104, 106) by a predetermined number of bit units, to output each such divided converted channel word as a divided parallel channel word and, wherein, said control signal generating means (125) is arranged for storing in advance spectrum data according to a predetermined track pattern, corresponding to the divided parallel channel word, and wherein the step of analysing frequency characteristics is performed by analysing the divided parallel channel words of each channel supplied in parallel from said time division multiplexing means by using the stored spectrum data.

2. A digital signal recorder according to claim 1, wherein said control signal generating means comprises:
a predetermined number of memories (114) for each channel, storing the spectrum data according to said track pattern corresponding to all data capable of being expressed by said divided parallel channel;
an address controller (116) for generating an address signal so as to read out desired spectrum data stored in said memories according to said track pattern;
a predetermined number of accumulation circuits (118) for each channel, for accumulating said spectrum data read out from said memories by n+m bits unit;
a predetermined number of absolute value calculating circuits (120) for each channel, for obtaining the absolute values of the values accumulated in said accumulation circuits;
an adding circuit (122) for each channel, for adding the outputs of said absolute value calculating circuits; and
a comparison controller (124) for outputting a selection control signal for selecting the channel word having the smallest value by comparing the outputs of said adding circuit of each channel with one another, and feeding back a control signal for presetting the accumulated value of an unselected accumulation circuit to the value of the accumulation circuit of the selected channel, to said accumulation circuits of each channel.

3. A digital signal recorder according to claim 2, wherein said memory (114) comprises LUTs including data regions corresponding to the number of track patterns in which data forming a peak and having no DC component according to said track pattern is stored.

4. A digital signal recorder according to claim 2 or 3, wherein said memory (114) comprises LUTs including data regions in which data forming a notch according to said track pattern is stored.

5. A digital signal recorder according to claim 2, 3 or 4, wherein said memory (114) comprises LUTs including data regions in which data forming a dip on either side of a peak according to said track pattern is stored.

6. A digital signal recorder according to claim 2, 3, 4 or 5, wherein said memory (114) comprises:
a first LUT including data regions in which data forming a peak and having no DC component according to said track pattern is stored;
a second LUT including data regions in which data forming a notch according to said track pattern per each channel is stored; and
a third LUT including data regions in which data forming a dip on either side of said peak according to said track pattern is stored.

7. A digital signal recorder according to any of claims 2 to 6, wherein said predetermined number of bit units is a common divisor of the period of said channel word of n+m bits and the period of spectral energy to be controlled according to said track pattern, and wherein said period of spectral energy is a positive number times a system clock.

8. A digital signal recorder according to claim 7, wherein m is one, n is 24 and the common divisor is five.

9. A digital signal recorder according to claim 7 or 8, wherein said memory (114) of each channel receives a parallel divided channel word supplied from said time division multiplexing means (112) as a lower address and receives the address supplied from said address controller (116) as an upper address, so as to read out spectrum data according to said upper and lower addresses.

## Patentansprüche

1. Digitaler Signalrecorder zum Umwandeln eines Informationswortes mit n Bits in ein Kanalwort mit n+m Bits, um das umgewandelte Kanalwort als digitale Information auf einer Informationsspur eines magnetischen Aufzeichnungsmediums aufzuzeichnen, wobei der digitale Signalrecorder umfaßt:
einen Eingangsport (102) für den parallelen Empfang des Informationswortes mit n Bits;
eine Codiereinrichtung (104, 106) zum parallelen Einfügen von m Bits in das Eingangsinformationswort mit n Bits, das in mindestens zwei Kanalworte mit n+m Bits umzuwandeln ist, und zum Ausgeben der umgewandelten Kanalworte;
eine Steuersignal-Erzeugungseinrichtung (125) zum Analysieren von Frequenzkennlinien und zum Erzeugen eines Selektionssteuersignals zum Selektieren des Kanalwortes mit einer gewünschten Frequenzkennlinie auf des Basis des analysierten Spektrums; und
eine Aufzeichnungseinrichtung (126, 128) zum Selektieren eines von den mehreren Kanalworten mit n+m Bits, die von der Codiereinrichtung auf der Basis des Selektionssteuersignals geliefert werden, und zum Aufzeichnen des selektierten Kanalwortes auf der Informationsspur des magnetischen Aufzeichnungsmediums so, daß es ein serielles Kanalwort ist,
wobei der Signalrecorder **dadurch gekennzeichnet ist,** daß ferner vorgesehen ist:
eine Zeitmultiplexeinrichtung (112) zum Unterteilen der umgewandelten Kanalworte aus der Codiereinrichtung (104, 106) in eine vorbestimmte Anzahl von Biteinheiten, um jedes derart unterteilte umgewandelte Kanalwort als ein unterteiltes paralleles Kanalwort auszugeben und, wobei die Steuersignal-Erzeugungseinrichtung (125) dafür eingerichtet ist, im voraus Spektraldaten gemäß einem vorbestimmten Spurmuster zu speichem, das dem unterteilten parallelen Kanalwort entspricht, und wobei der Schritt der Analyse der Frequenzkennlinien durchgeführt wird, indem die unterteilten parallelen Kanalworte jedes Kanals parallel von der Zeitmultiplexeinrichtung unter Verwendung der gespeicherten Spektraldaten geliefert werden.

2. Digitaler Signalrecorder nach Anspruch 1, wobei die Steuersignal-Erzeugungseinrichtung umfaßt:
eine vorbestimmte Anzahl von Speichern (114) für jeden Kanal, welche die Spektraldaten gemäß dem Spurmuster speichern, welches allen Daten entspricht, die durch den ungeteilten parallelen Kanal ausgedrückt werden können;
eine Adressensteuerung (116) zum Erzeugen eines Adressensignals, um so In den Speichem gespeicherte gewünschte Spektraldaten gemäß dem Spurmuster auszulesen;
eine vorbestimmte Anzahl von Akkumulationsschaltungen (118) für jeden Kanal zum Akkumulieren der aus den Speichem in n+m Biteinheiten ausgelesenen Spektraldaten;
eine vorbestimmte Anzahl von Absolutwert-Berechnungsschaltungen (120) für jeden Kanal, um die Absolutwerte der in den Akkumulationsschaltungen akkumulierten Werte zu erhalten;
eine Addierschaltung (122) für jeden Kanal, um die Ausgangssignale der Absolutwert-Berechnungsschaltungen zu addieren; und
eine Vergleichssteuerung (124) zum Ausgeben eines Selektionssteuersignals, um das Kanalwort mit dem kleinsten Wert zu selektieren, indem die Ausgangssignale der Addierschaltung jedes Kanals miteinander verglichen werden, und ein Steuersignal für das Vorsetzen des akkumulierten Wertes einer nicht selektierten Akkumulationsschaltung auf den Wert der Akkumulatlonsschaltung des selektierten Kanals an die Akkumulationsschaltungen jedes Kanals zurückgeführt wird.

3. Digitaler Signalrecorder nach Anspruch 2, wobei der Speicher (114) LUT's mit Datenbereichen umfaßt, welche der Anzahl von Spurmustern entsprechen, in welchen eine Spitze ausbildende und keine DC-Komponente aufweisende Daten gemäß dem Spurmuster gespeichert sind.

4. Digitaler Signalrecorder nach Anspruch 2 oder 3, wobei der Speicher (114) LUT's mit Datenbereichen aufweist, in welchen Daten, welche eine Kerbe ausbilden, gemäß dem Spurmuster gespeichert sind.

5. Digitaler Signalrecorder nach Anspruch 2, 3 oder 4, wobei der Speicher (114) LUT's mit Datenbereichen aufweist, in welchen Daten, welche eine Absenkung an beiden Seiten einer Spitze ausbilden, gemäß dem Spurmuster gespeichert sind.

6. Digitaler Signalrecorder nach Anspruch 2, 3, 4 oder 5, wobei der Spelcher (114) umfaßt:
einen ersten LUT mit Datenbereichen in welchen Daten, welche eine Spitze ausbilden und keine DC-Komponente aufweisen, gemäß dem Spurmuster gespeichert sind;
einen zweiten LUT mit Datenregionen, in welchen Daten, welche eine Kerbe gemäß dem Spurmuster ausbilden, für jeden Kanal gespeichert sind; und
einen dritten LUT mit Datenbereichen, In welchen Daten, welche eine Absenkung an beiden Seiten der Spitze ausbilden, gemäß dem Spurmuster gespeichert sind.

7. Digitaler Signalrecorder nach einem der Ansprüche 2 bis 6, wobei die vorbestimmte Anzahl von Biteinheiten ein gemeinsamer Teiler der Periode des Kanalworts von n+m Bits und der Periode der gemäß dem Spurmuster zu steuernden Spektralenergie ist, und wobei die Periode der Spektralenergie eine positive Zahl mal einem Systemtakt ist.

8. Digitaler Signalrecorder nach Anspruch 7, wobei m gleich Eins ist, n gleich 24 ist, und der gemeinsame Teiler 5 ist.

9. Digitaler Signalrecorder nach Anspruch 7 oder 8, wobei der Speicher (114) jedes Kanals ein paralleles getelltes Kanalwort empfängt, das von der Zeitmultiplexelnrichtung (112) als eine untere Adresse gellefert wird, und die von der Adressensteuerung (116) gelleferte Adresse als eine obere Adresse empfängt, um so Spektraldaten gemäß den oberen und unteren Adressen auszulesen.

## Revendications

1. Dispositif d'enregistrement de signaux numériques pour convertir un mot d'informations de n bits en un mot de canal de n+m bits afin d'enregistrer le mot de canal converti sous forme d'informations numériques sur une piste d'informations d'un support d'enregistrement magnétique, ledit dispositif d'enregistrement de signaux numériques comportant :
un port d'entrée (102) pour recevoir en parallèle ledit mot d'informations de n bits,
des moyens de codage (104, 106) pour insérer m bits dans ledit mot d'informations d'entrée de n bits entré en parallèle pour être converti en au moins deux mots de canal de n+m bits, et délivrer en sortie les mots de canal convertis,
des moyens de génération de signal de commande (125) pour analyser des caractéristiques fréquentielles et générer un signal de commande de sélection pour sélectionner ledit mot de canal ayant une caractéristique fréquentielle voulue sur la base du spectre analysé, et
des moyens d'enregistrement (126, 128) pour sélectionner un mot parmi la pluralité de mots de canal de n+m bits délivrés par lesdits moyens de codage sur la base dudit signal de commande de sélection et enregistrer le mot de canal sélectionné sur la piste d'informations du support d'enregistrement magnétique de manière à être un mot de canal série,
le dispositif d'enregistrement de signaux étant caractérisé en ce qu'il comporte en outre
des moyens de multiplexage par répartition dans le temps (112) pour diviser lesdits mots de canal convertis provenant des moyens de codage (104, 106) par un nombre prédéterminé d'unités de bits, pour délivrer en sortie chaque mot de canal converti divisé sous la forme d'un mot de canal parallèle divisé et, lesdits moyens de génération de signal de commande (125) étant conçus pour mémoriser à l'avance des données spectrales conformément à un motif de piste prédéterminé, correspondant au mot de canal parallèle divisé, et l'étape consistant à analyser les caractéristiques fréquentielles étant effectuée en analysant les mots de canal parallèles divisés de chaque canal délivrés en parallèle par lesdits moyens de multiplexage par répartition dans le temps en utilisant les données spectrales mémorisées.

2. Dispositif d'enregistrement de signaux numériques selon la revendication 1, dans lequel lesdits moyens de génération de signal de commande comportent :
un nombre prédéterminé de mémoires (114) pour chaque canal, mémorisant les données spectrales conformément audit motif de piste correspondant à toutes les données pouvant être exprimées par ledit canal parallèle divisé,
un contrôleur d'adresse (116) pour générer un signal d'adresse de manière à lire des données spectrales voulues mémorisées dans lesdites mémoires selon ledit motif de piste,
un nombre prédéterminé de circuits d'accumulation (118) pour abaque canal, pour accumuler lesdites données spectrales lues à partir desdites mémoires par unité de n+m bits,
un nombre prédéterminé de circuits de calcul de valeurs absolues (120) pour chaque canal, pour obtenir les valeurs absolues des valeurs accumulées dans lesdits circuits d'accumulation,
un circuit d'addition (122) pour chaque conal, pour additionner les sorties desdits circuits de calcul de valeurs absolues, et
un contrôleur de comparaison (124) pour délivrer en sortie un signal de commande de sélection destiné à sélectionner le mot de canal ayant la plus petite valeur en comparant les sorties dudit circuit d'addition de chaque canal les unes aux autres, et pour renvoyer un signal de commande, destiné à établir préalablement la valeur accumulée d'un circuit d'accumulation non-sélectionné à la valeur du circuit d'accumulation du canal sélectionné, auxdits circuits d'accumulation de chaque canal.

3. Dispositif d'enregistrement de signaux numériques selon la revendication 2, dans lequel ladite mémoire (114) comporte des LUT incluant des zones de données correspondant au nombre de motifs de piste dans lesquelles sont mémorisées des données formant une crête et n'ayant aucune composante continue (DC) conformément audit motif de piste.

4. Dispositif d'enregistrement de signaux numériques selon la revendication 2 ou 3, dans lequel ladite mémoire (114) comporte des LUT incluant des zones de données dans lesquelles sont mémorisées des données formant une encoche conformément audit motif de piste.

5. Dispositif d'enregistrement de signaux numériques selon la revendication 2, 3 ou 4, dans lequel ladite mémoire (114) comporte des LUT incluant des zones de données dans lesquelles sont mémorisées des données formant une pente sur chaque côté d'une arête conformément audit motif de piste.

6. Dispositif d'enregistrement de signaux numériques selon la revendication 2, 3, 4 ou 5, dans lequel ladite mémoire (114) comporte :
un premier LUT incluant des zones de données dans lesquelles sont mémorisées des données formant une crête et n'ayant aucune composante continue (DC) conformément audit motif de piste,
un deuxième LUT incluant des zones de données dans lesquelles sont mémorisées des données formant une encoche conformément audit motif de piste pour chaque canal, et
un troisième LUT incluant des zones de données dans lesquelles sont mémorisées des données formant une pente sur chaque côté de ladite crête conformément audit motif de piste.

7. Dispositif d'enregistrement de signaux numériques selon l'une quelconque des revendications 2 à 6, dans lequel ledit nombre prédéterminé d'unités de bits est un diviseur commun do la période dudit mot de canal de n+m bits et de la période de l'énergie spectrale à commander conformément audit motif de piste, et dans lequel ladite période d'énergie spectrale est égale à un nombre de fois positif d'une horloge système.

8. Dispositif d'enregistrement de signaux numériques selon la revendication 7, dans lequel m est égal à un, n est égal à 24 et le diviseur commun est égal à cinq.

9. Dispositif d'enregistrement de signaux numériques selon la revendication 7 ou 8, dans lequel ladite mémoire (114) de chaque canal reçoit un mot de canal divisé parallèle délivré par lesdits moyens de multiplexage par répartition dans le temps (112) en tant qu'adresse inférieure et reçoit l'adresse délivrée par ledit contrôleur d'adresse (116) en tant qu'adresse supérieure, de manière à lire des données spectrales conformément auxdites adresses supérieure et inférieure.
